## Europäisches Patentamt
## European Patent Office
## Office européen des brevets

(11) Veröffentlichungsnummer: **0 179 307 B1**

(12) **EUROPÄISCHE PATENTSCHRIFT**

(45) Veröffentlichungstag der Patentschrift:
**12.04.89**

(51) Int. Cl.⁴: **B 65 G 11/16, F 16 B 37/14**

(21) Anmeldenummer: **85112325.7**

(22) Anmeldetag: **28.09.85**

(54) **Verschleissschutzelement.**

(30) Priorität: **24.10.84 DE 3438875**

(43) Veröffentlichungstag der Anmeldung:
**30.04.86 Patentblatt 86/18**

(45) Bekanntmachung des Hinweises auf die Patenterteilung:
**12.04.89 Patentblatt 89/15**

(84) Benannte Vertragsstaaten:
**AT BE FR GB IT NL SE**

(56) Entgegenhaltungen:
**AT-B- 254 048**
**DE-A- 1 531 883**

(73) Patentinhaber: **Fried. Krupp Gesellschaft mit beschränkter Haftung, Altendorfer Strasse 103, D-4300 Essen 1 (DE)**

(72) Erfinder: **Leymann, Helmut, Dipl.-Ing., Jägerstrasse 40 a, D-4100 Duisburg 14 (DE)**

ACTORUM AG

## Beschreibung

Die Erfindung betrifft ein Abdeckelement aus verschleissfestem Material nach dem Oberbegriff des Anspruchs 1.

Zu Konstruktionen, die einem erhöhten Verschleiss ausgesetzt sind, gehören u.a. Rutschen für abrasives Gut. Zum Austausch von Verschleissteilen sind in solchen Konstruktionen Elemente für lösbare Verbindungen, insbesondere Schrauben vorhanden.

Durch den Einfluss des abrasiven Gutes verschleissen die Schraubenköpfe, so dass ein Lösen der Schrauben unmöglich gemacht, zumindest aber erschwert wird.

Zur Ausschaltung dieses Nachteils werden die Schraubenköpfe in Ausnehmungen angeordnet, die von entsprechenden Formteilen z.B. aus Verschleissgummi ausgefüllt werden. Hierbei ergibt sich jedoch der weitere Nachteil, dass diese Formteile bei zu geringer Haftung sich lösen und bei ausreichend festem Sitz nur schwer wieder aus der Ausnehmung zu entfernen sind.

Weiterhin sind verschleissfeste Leisten bekannt, die an ihrer Unterseite eine Nut zur Aufnahme eines Schraubenkopfes mit zwei parallelen Seitenflächen, z.B. eines Vierkantkopfes aufweisen. Eine solche Leiste setzt aber voraus, dass die Schraube in der Konstruktion an ihrem freien Gewindeende zur Handhabung einer Mutter zugänglich ist, was z.B. bei einem Gewindesackloch in einem Tragteil der Konstruktion nicht gegeben ist.

Der Erfindung liegt die Aufgabe zugrunde, ein Abdeckelement aus verschleissfestem Material zum Schutz von Schrauben oder anderen Elementen derart zu gestalten, dass es leicht zu entfernen und auszutauschen und das zu schützende Element jederzeit leicht zugänglich und handhabbar ist.

Diese Aufgabe wird durch die im Anspruch 1 angegebenen Merkmale gelöst. Im einfachsten Fall besteht das Abdeckelement somit lediglich aus dem Dauermagneten selbst. Das Einsetzen des Abdeckelements wird durch die Wirkung des Dauermagneten begünstigt. Das Entfernen des Abdeckelements kann bei Abdeckelementen, die lediglich aus dem Dauermagneten selbst bestehen oder ein ferromagnetisches Trägerteil aufweisen, durch einen separaten Magneten erfolgen. Das Entfernen von Abdeckelementen mit einem Trägerteil aus nicht ferromagnetischem Material, z.B. aus Gummi, wird dadurch erleichtert, dass das Trägerteil wegen der Haftung durch den Dauermagneten mit geringerem Durchmesser ausgebildet werden kann. Dadurch kann ein Schraubenzieher zum Heraushebeln des Trägerteils gut angesetzt werden.

Vorteilhafte Weiterentwicklungen des Gegenstandes der Erfindung sind in den Unteransprüchen beschrieben. So wird der Dauermagnet durch das über ihm befindliche Trägerteil, insbesondere wenn dieses aus Gummi besteht, gegen von dem Transportgut verursachte Stösse geschützt.

Die kreisringförmige Ausbildung des Dauermagneten nach Anspruch 3 verbessert den magnetischen Fluss und ergibt somit eine günstigere Ausnutzung des magnetischen Materials. Das gleiche gilt für die gegensinnige Polarität nach Anspruch 5 bei der Verwendung mehrerer Dauermagnete.

Ausführungsbeispiele des Gegenstandes der Erfindung sind in der Zeichnung dargestellt und werden im folgenden näher beschrieben. Es zeigen:

Fig. 1 ein an einem Tragteil mit Schrauben befestigtes Schleissblech und eine die Schrauben abdeckende Leiste in einem Querschnitt,

Fig. 2 die Anordnung nach Fig. 1 in einem Längsschnitt,

Fig. 3 eine auf einem Schleissblech befestigte Schleissleiste mit einzelnen Einsatzstücken zum Abdecken von Schraubenköpfen im Querschnitt,

Fig. 4 den Roststab eines Siebes mit einem Abdeckstopfen in einem Querschnitt und

Fig. 5 ein mit Schrauben an ein Tragteil angeschraubtes Schleissblech mit einer um die Schrauben angeordneten Schleissleiste, wobei die Schraubköpfe lediglich durch einen Dauermagneten abgedeckt sind.

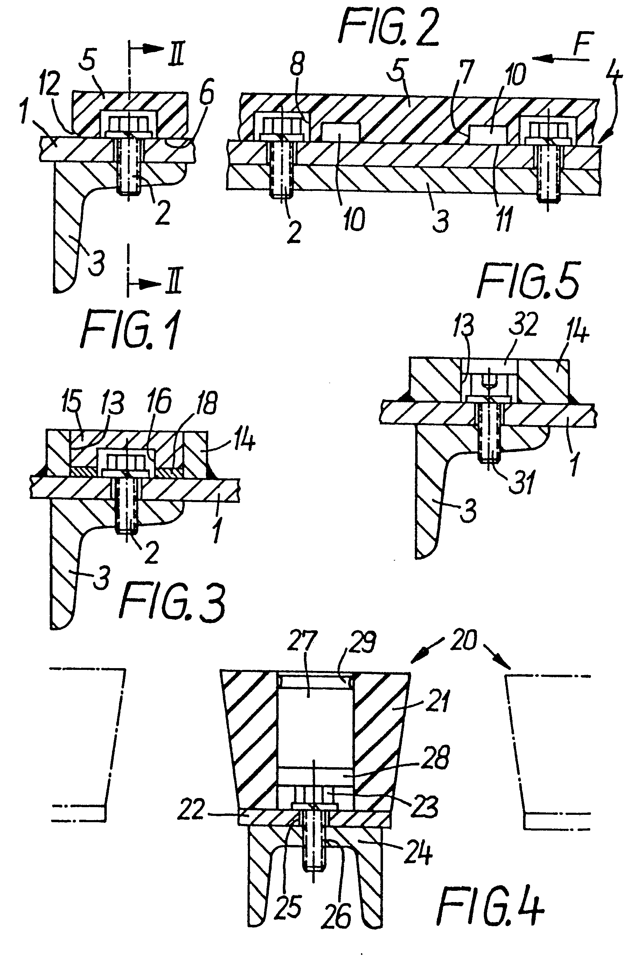

Bei dem Ausführungsbeispiel gemäss Fig. 1 ist das Schleissblech 1 aus Stahl mit Hilfe von Kopfschrauben 2 an einem L-förmigen Träger 3 einer für den Transport von Granulat vorgesehenen Rutsche 4 befestigt. Die in Förderrichtung F in Reihe angeordneten Schrauben 2 werden durch eine Abdeckleiste 5 aus Kunststoff verdeckt. An ihrer Unterseite 6 hat die Leiste 5 Ausnehmungen 7, 8. In den Ausnehmungen 7 sind scheibenförmige Dauermagnete 10 eingefügt und geklebt, die mit ihrer sichtbaren Stirnfläche 11 bündig mit der Unterseite 6 der Leiste 5 abschliessen. Die anderen Ausnehmungen 8 sind tiefer und weiter als die Höhe bzw. der Durchmesser des Kopfes der Schrauben 2. Am Rand der Unterseite 6 weist die Leiste 5 eine Fase 12 auf, die ein Abhebeln der Leiste 5 vom Schleissblech 1 erleichtert.

Bei dem Ausführungsbeispiel nach Fig. 3 ist das Schleissblech 1 aus Stahl wieder mit Schrauben 2 an einem L-förmigen Träger 3 befestigt. Auf das Schleissblech 1 ist eine mit Durchgangslöchern 13 versehene Schleissleiste 14 aus Stahl geschweisst. Die Anordnung der Durchgangslöcher 13 entspricht dabei der Anordnung der Schrauben 2 auf dem Schleissblech 1. In die Durchgangslöcher 13 der Schleissleiste 14 wird jeweils ein Schleisseinsatz 15 aus Stahl eingelegt, der an seiner Unterseite eine Ausnehmung 16 hat, in die der Kopf der Schraube 2 ragen kann. An die ringförmige untere Stirnseite des Schleisseinsatzes 15 ist ein entsprechend ringförmig ausgebildeter Dauermagnet 18 angeklebt. Das Entfernen des Schleisseinsatzes 15 kann mit einem stärkeren (nicht dargestellten) Dauermagneten erfolgen.

In Fig. 4 ist ein Roststab 20 eines Siebes dargestellt, der aus einem sich nach unten verjüngenden gleichschenklig-trapezförmigen Gummiprofil 21 und einer mit diesem durch Vulkanisation verbundenen Grundleiste 22 aus Stahl besteht. Der ganze Roststab 20 ist mit Schrauben 23 an einem U-förmigen Träger 24 befestigt, wobei die Grundleiste 22 mit Durchgangslöchern 25 versehen ist und die Schrauben 23 in Gewindebohrungen 26 im Träger 24 eingreifen. Über den Schrauben 23 befindet sich ein Gummistopfen 27, an dessen Unterseite ein scheibenförmiger Dauermagnet 28 anvulkanisiert ist. Zum leichteren Herausheben ist der Gummistopfen 27 an seinem oberen Rand mit einer kleinen Umfangsnut 29 versehen.

Bei dem Ausführungsbeispiel gemäss Fig. 5 ist das Schleissblech 1 aus Stahl mit Hilfe von Zylinderkopf- oder Innensechskantschrauben 31 an dem Träger 3 angeschraubt. Das auf dem Kopf jeder Schraube 31 aufliegende Abdeckelement besteht bei diesem Ausführungsbeispiel lediglich aus einem scheibenförmigen Dauermagneten 32, der in dem bzw. einem Durchgangsloch 13 der Schleissleiste 14 eingelegt ist. Die Oberseite des Dauermagneten 32 liegt in der Ebene der Oberseite der Schleissleiste 14. Das Durchgangsloch 13 ist in bezug auf den Dauermagneten 32 mit einer Spielpassung ausgebildet.

**Patentansprüche**

1. Abdeckelement aus verschleissfestem Material für Elemente einer Konstruktion, wobei das Element und/oder das dieses umgebende Teil der Konstruktion aus ferromagnetischem Werkstoff besteht, dadurch gekennzeichnet, dass das Abdeckelement mindestens aus einem Dauermagneten (10; 18; 28; 32) besteht.

2. Abdeckelement nach Anspruch 1, dadurch gekennzeichnet, dass ein Dauermagnet (18; 28) mit einem zylindrischen Trägerteil (15; 27) verbunden ist.

3. Abdeckelement nach Anspruch 2, dadurch gekennzeichnet, dass der Dauermagnet (18) kreisringförmig ausgebildet ist.

4. Abdeckelement nach Anspruch 2, dadurch gekennzeichnet, dass mehrere Dauermagneten (10) an einem gemeinsamen, in Form einer Leiste ausgebildeten Trägerteil (5) angeordnet sind.

5. Abdeckelement nach Anspruch 4, dadurch gekennzeichnet, dass jeweils zwei benachbarte Dauermagnete gegensinnig polarisiert sind.

6. Abdeckelement nach Anspruch 2, dadurch gekennzeichnet, dass das Trägerteil (5; 15) für jedes abzudeckende Element (2) eine Ausnehmung (8; 16) aufweist.

**Revendications**

1. Elément protecteur en matériau résistant à l'usure pour les éléments d'une construction, l'élément et/ou la partie de la construction entourant celui-ci étant composé de matériau ferromagnétique, caractérisé en ce que l'élément protecteur se compose au moins d'un aimant permanent (10; 18; 28; 32).

2. Elément protecteur selon la revendication 1, caractérisé en ce qu'un aimant permanent (18; 28) est relié à une pièce porteuse cylindrique (15; 27).

3. Elément protecteur selon la revendication 2, caractérisé en ce que l'aimant permanent (18) est en forme de couronne.

4. Elément protecteur selon la revendication 2, caractérisé en ce que plusieurs aimants permanents (10) sont disposés sur une pièce porteuse (5) commune réalisée sous forme d'une bande.

5. Elément protecteur selon la revendication 4, caractérisé en ce que deux aimants permanents voisins sont chaque fois polarisés de manière inverse.

6. Elément protecteur selon la revendication 2, caractérisé en ce que la pièce porteuse (5; 15) de chaque élément (2) à recouvrir présente un évidement (8; 16).

**Claims**

1. A covering element of wear-resistant material for elements of a construction, wherein the element and/or the part of the construction enclosing such element is made of a ferromagnetic material, characterized in that the covering element comprises at least one permanent magnet (10; 18; 28; 32).

2. A covering element according to claim 1, characterized in that a permanent magnet (18; 28) is connected to a cylindrical carrier member (15; 27).

3. A covering element according to claim 2, characterized in that the permanent magnet (18) is circular in construction.

4. A covering element according to claim 2, characterized in that a number of permanent magnets (10) are disposed on a common carrier member (5) taking the form of a strip.

5. A covering element according to claim 4, characterized in that each pair of adjacent permanent magnets is oppositely polarized.

6. A covering element according to claim 2, characterized in that the carrier member (5; 15) is formed with a recess (8; 16) for each element (2) to be covered.

1 / 1

FIG. 2

FIG. 1

FIG. 5

FIG. 3

FIG. 4